# EUROPEAN PATENT APPLICATION

(11) **EP 0 696 029 A2**
(43) Date of publication of application: **07.02.1996**
(21) Application number: 95109805.2
(22) Date of filing: 23.06.1995
(51) Int. Cl.: G11B 19/00

(54) **Complex motor**

(30) Priority: 23.06.1994 JP 164730/94
(71) Applicant: NAKAMICHI CORPORATION, Kodaira-shi, Tokyo 187 (JP)
(72) Inventor: Nakamichi, Niro, Tokyo 179 (JP)
(74) Representative: Merten, Fritz

(57) **Abstract**

A high torque motor drive, for rotating turntables, moving optical pickups in CD players, and other applications, employs two motors, drivingly connected in parallel. The outputs of motors used in compact machines are characterized by torque ripple curves in which torque peaks occur at predictable rotational phase angles of the motor's rotor. In the present invention, the rotors of the motors are interconnected by the drive train in such a way that the torque ripples cancel each other out. In a preferred embodiment of the invention, the torque ripple curve has torque peaks that occur every 60 degrees of angular displacement of the rotor. The rotors of the two motors are drivingly interconnected to maintain a one-to-one relationship between the rotor angular positions. The stators of the motors are positioned so that the torque peaks of one of the two motors occurs at a time different from those of the other motor. At least partial cancellation of the torque peaks is achieved. If only partial cancellation occurs, the result is that the drive cogs at a frequency that is twice that of a single motor. In addition, the stopping resolution for the drive of the invention is lower than in a system that employs one motor. Thus a CD player's optical pickup positioning resolution can be substantially increased. Smooth drive output is also achieved, which is a benefit for rotating a CD's turntable. Moreover, high torque is available in a compact unitary configuration.

## Description

### BACKGROUND OF THE INVENTION

The present invention relates to high torque motor drives for small machines such as compact disk (CD) players. Many small machines, such as CD players, require high output motor drives. CD players use a laser beam generated by an optical pickup to scan and play back data recorded on surfaces of the compact disks. Compact disks (CDs) are read using a constant linear velocity (CLV) method that requires that the surface of the disk pass under the optical pickup at a constant velocity as the disk is rotated. Thus the angular velocity at which the disk is rotated depends on which track is being played. Typically, when the inner-most track is being played back, the disk is rotated at 500 rpm. When the outer-most track is being played back, the disk is rotated at 200 rpm. Therefore, the speed of the spindle motor used to rotate the disk must be able to rotate the disk over an approximately 300 rpm range.

Compact disks used for computer data, CD-ROMs, require the highest possible data transfer rates. To achieve high data transfer rates, drives having disk rotation speeds that are double and quadruple the normal speed are used. For example, to double the rotation speed of a disk, the disk speed, when the inner track is scanned, must be approximately 1000 rpm. The disk speed, during scanning of the outer track, must be approximately 400 rpm. To play back data after moving the optical pickup in the radial direction, it is necessary to move the optical pickup to an appropriate radial position and then to rotate the disk at a speed corresponding to the radial position. In such cases, the time it takes to bring the rotational speed of the disk to the appropriate level has an important impact on the access speed of the disk player.

A spindle motor with high torque permits rapid changes in rotation speed. However, such motors tend to be large and expensive. Referring to Fig. 8, a drive 70 in a personal computer 71 occupies a standard space for drives, known as a form factor. A standard form factor is a width of 146mm (5.75 inches), a height of 82mm (3.25 inches), and a depth of 203mm (8.0 inches). Since drive 1 must fit within these dimensions, a large motor is a major obstacle in designing such a drive. U.S. patent 4,394,594 discloses a large flat motor in which the coil and the magnet are located in a single plane. Because of its large diameter, such a motor is not practical. Also, it is known that the torque of a motor can be increased without making the motor larger, but such approaches increase the cost of the motor dramatically. Furthermore, motors that have a large torque are generally susceptible to significant periodic fluctuations in torque (torque ripple) as they rotate. These ripples need to be mitigated in some way if such a motor is to be used for rotating a disk smoothly.

To overcome the above drawbacks, Japanese utility model examined publication number 62-117758 proposes a configuration using two spindle motors. During normal rotation, when data recorded on the disk is being played back, the disk is rotated by the main motor alone. During start-up, when the rotation speed of the disk is abruptly increased, and during accessing, when the playback position is moved in the radial direction and the speed of the disk changed, the disk is rotated by both the main motor and the secondary motor. This configuration makes possible large and rapid changes in disk rotation speed without the use of an expensive high-torque motor. Unfortunately, however, this configuration requires a clutch to disconnect the main and secondary motors during normal rotation. Additionally, the output from the secondary motor is connected to one end of the shaft from of main motor, while the turntable, on which the disk is mounted, is connected to the other end of the main motor shaft. Thus, a single general-purpose motor cannot be used. The requirement of different motors for the main and secondary motors inevitably leads to higher production costs.

Japanese laid-open publication number 62-31067 describes a similar configuration using a main motor and a secondary motor. During start-up, the secondary motor rotates the disk. During normal rotation, the main motor rotates the disk. However, in this configuration, the main motor and the secondary motor lie on the same axis. Thus, as in the case described above, two kinds of motors are employed making this motor unattractive in terms of production costs. In addition, in this type of motor drive the motor arrangement leads to a large size in the axial direction.

Japanese laid-open publication number 59-165977 describes a composite motor that consists of a plurality of A.C. brushless motors whose shafts are connected by one gear. However, in this drive, the problem of torque ripple is significant. Thus, it is not appropriate in applications that require smooth rotation.

### OBJECTS AND SUMMARY OF THE INVENTION

It is an object of the present invention to provide a disk rotating device that overcomes the drawbacks of the prior art.

Another object of the invention is to provide a motor drive that permits rapid accessing and start-up.

Still another object of the invention is to provide a motor drive for rotating a turntable.

Still another object of the invention is to provide a motor drive for moving and positioning an optical pickup for a disk player.

Still another object of the invention is to provide a motor drive that can be used in various devices without basic modification.

Still another object of the invention is to provide a motor drive that is compact and has high torque.

Still another object of the invention is to provide a motor drive that can operate with low vibration.

Still another object of the invention is to provide a motor drive that can operate for long periods without failure.

To increase access speed, the spindle motor's output torque must be increase. In addition, increasing the torque of the thread motor to increase the thread speed will also increase access speed by shortening the time required to move the optical pickup to a target radial position of a disk. With a higher torque motor and a lower deceleration factor of the final drive, faster access can be obtained. But this would have adverse effects on the resolution of positioning for tracking. Because the small motors used in such systems have natural settling positions, typically separated by 60 degrees of rotor rotation, a deceleration gear mechanism with decreased deceleration ratio would suffer a corresponding decrease in positioning resolution. In a three-pole brush motor having two permanent magnetic poles and three armature coils, the natural stopping position for the motor shaft is every 60 degrees; six stopping positions per rotation. A resolution pitch of 1.6 micrometer resolution pitch obtained with such a motor, and a given deceleration ratio, would be doubled if the deceleration ratio were cut by half to increase access speed with a higher torque motor. In addition, again, the necessity of a high torque motor adversely affects production costs, as discussed above.

Briefly, a high torque motor drive, for rotating turntables, moving optical pickups in CD players, and other applications, employs two motors, drivingly connected in parallel. The outputs of motors used in compact machines are characterized by torque ripple curves in which torque peaks occur at predictable rotational phase angles of the motor's rotor. In the present invention, the rotors of the motors are interconnected by the drive train in such a way that the torque ripples cancel each other out. In a preferred embodiment of the invention, the torque ripple curve has torque peaks that occur every 60 degrees of angular displacement of the rotor. The rotors of the two motors are drivingly interconnected to maintain a one-to-one relationship between the rotor angular positions. The stators of the motors are positioned so that the torque peaks of one of the two motors occurs at a time different from those of the other motor. At least partial cancellation of the torque peaks is achieved. If only partial cancellation occurs, the result is that the drive cogs at a frequency that is twice that of a single motor. In addition, the stopping resolution for the drive of the invention is lower than in a system that employs one motor. Thus a CD player's optical pickup positioning resolution can be substantially increased. Smooth drive output is also achieved, which is a benefit for rotating a CD's turntable. Moreover, high torque is available in a compact unitary configuration.

According to an embodiment of the present invention, there is described, a motor drive for disk player turntables and optical pickups, comprising: chassis, a turntable for supporting a disk, first and second motors fixedly connected to the chassis, for rotating the turntable, the first motor having a first output shaft with a first torque peak occurring at a first position of the first output shaft, the second motor having a second output shaft with a second torque peak occurring at a second position of the second output shaft and means for drivingly connecting the first and second output shafts so that the first output shaft is in the first position at a time when the second shaft is in a position other than the second position, whereby the first and second torque peaks, at least partially, cancel each other out when the first and second motors rotate.

According to another embodiment of the present invention, there is described, a motor drive for disk player turntables and optical pickups, comprising: a first motor with a first torque ripple curve having at least one first torque peak, a second motor with a second torque ripple curve having at least one second torque peak and means for drivingly interconnecting the first motor with the second motor so that the first torque peak is non-coincident with the second torque peak.

According to still another embodiment of the present invention, there is described, a motor drive for disk player turntables and optical pickups, comprising: chassis, a turntable for supporting a disk, the turntable being rotatably connected to the chassis, first and second motors, fixedly connected to the chassis, for rotating the turntable, the first and second motors having respective first and second stators, the first motor having a first output shaft with a first torque peak occurring at a first position of the first output shaft relative to the first stator, the second motor having a second output shaft with a second torque peak occurring at a second position of the second output shaft relative to the second stator, means for drivingly connecting the first and second output shafts and the first stator being positioned relative to the second body so that the first output shaft is in the first position at a time when the second shaft is in a position other than the second position, whereby the first and second torque peaks, at least partially, cancel each other out when the first and second motors rotate.

According to still another embodiment of the present invention, there is described, a motor drive for disk player turntables and optical pickups, comprising: chassis, a turntable for supporting a disk, the turntable being rotatably connected to the chassis, first and second motors, fixedly connected to the chassis, for rotating the turntable, the first and second motors having respective first and second bodies, the first motor having a first output shaft with a first torque peak occurring at a first position of the first output shaft relative to the first body, the second motor having a second output shaft with a second torque peak occurring at a second position of the second output shaft relative to the second body, means for drivingly connecting the first and second output shafts, the means drivingly interconnecting including means for fixing an angular relationship between the first and second shafts and the angular relationship being fixed so that the first output shaft is in the first position at a time when the second shaft is in a position other than the second position, whereby the first and second torque peaks, at least partially, cancel each other out when the first and second motors rotate.

According to still another embodiment of the present invention, there is described, a chassis, first and second motors having first and second output shafts and first and second bodies, respectively, the first and second motors being fixedly mounted on the chassis with the first and second output shafts parallel and the first and second bodies side-by-side in substantially the same position along a direction parallel to the first and second output shafts, means for drivingly connecting the first and second output shafts, the means for drivingly connecting including means for synchronizing rotations of the first and second shafts at a one-to-one drive ratio, the first motor having a first torque peak occurring at a first position of the first output shaft, the second motor having a second torque peak occurring at a second position of the second output shaft and the means for synchronizing including means for insuring that the first output shaft is in the first position at a time when the second shaft is in a position other than the second position, whereby the first and second torque peaks, at least partially, cancel each other out when the first and second motors rotate.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is an exploded view of a composite motor according to a first embodiment of the present invention.

Fig. 2 is a perspective view of the composite motor of Fig. 1.

Fig. 3 is a plan external view of an internal configuration of the composite motor of Figs. 1, 2, and 5 according to another embodiment of the present invention.

Fig. 4 is a plot of a torque output of the composite motor of Figs. 2 and 5 versus angular displacement of a rotor.

Fig. 5 is a perspective view of a composite motor according to a second embodiment of the present invention.

Fig. 6 is a perspective view of a base mechanism of a CD-ROM drive employing the composite motor of Figs. 1, 2, 3, and 5.

Fig. 7 is a plan an external plan view of an internal configuration of the composite motor of Figs. 1, 2, and 5 according to another embodiment of the invention.

Fig. 8 is a drawing of a personal computer having a bay for a CD-ROM drive.

### DETAILED DESCRIPTION OF THE PREFERRED EMBODIMENTS

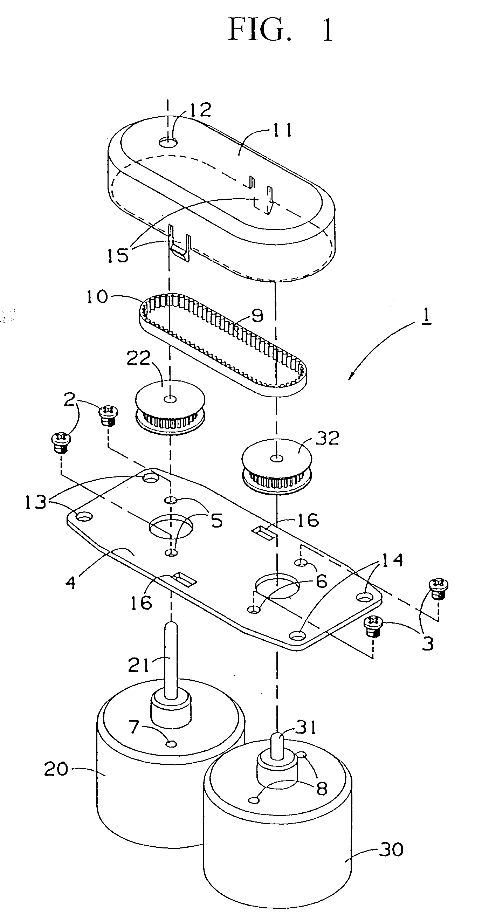

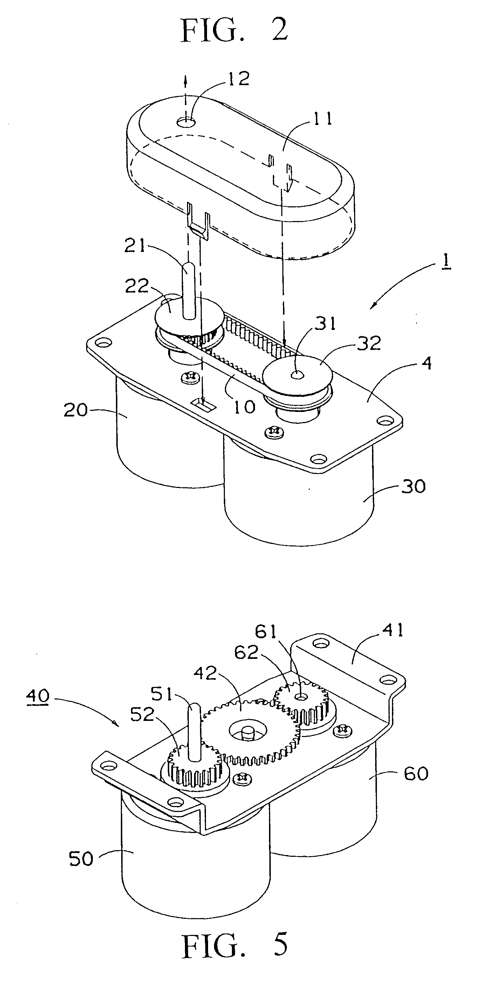

Referring to Figs. 1 and 2, a composite motor 1 includes first and second D.C. brush motors 20 and 30. Attachment screws 2 and 3 pass through holes 5 and 6 of a motor chassis 4 and thread into attachment holes 7 and 8 to attach first and second motors 20 and 30 to motor chassis 4.

First and second motors 20 and 30 are identical general-purpose motors with identical outer diameters and characteristics. First and second motors 20 and 30 are connected side-by-side to form a single power unit that can be drivingly connected to a device. In the present embodiment, a D.C. brush motor RF-310T from Mabuchi Motor Corp. is used. First and second motors are used in combination according to the invention, but each could be used to power disk player components by itself.

Gears 22 and 32, of identical diameter, attach to shafts 21 and 31 of first and second motors 20 and 30, respectively. Teeth 9 on an inside perimeter of a timing belt 10 mesh with the teeth of gears 22 and 32 to drivingly connect gears 22 and 32, thereby linking first and second motors 20 and 30 at a one-to-one drive ratio.

Shaft 21 of first motor 20, is longer than shaft 31 of second motor 30. Shaft 21 extends through a hole 12 on a top cover 11 to serve as a composite output drive shaft for composite motor 1. With this configuration, the torques of first and second motors 20 and 30 combine to produce a combined output torque delivered at shaft 21. Top cover 11 has a pair of claws 15 that engage holes 16 on motor chassis 4 to clip top cover 11 to chassis 4. Top cover 11 covers gears 22 and 32 and timing belt 10, to isolate them from dust and debris.

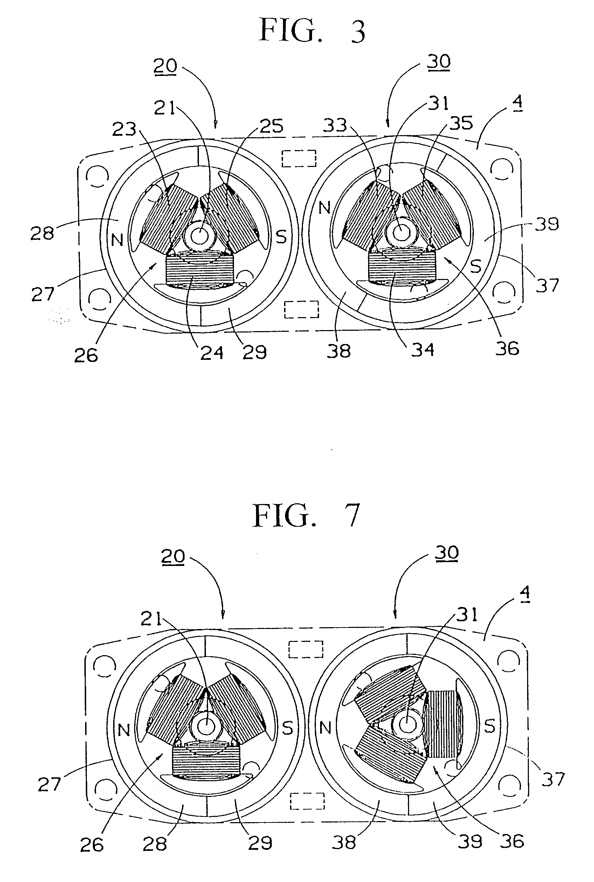

Referring to Fig. 3, first D.C. brush motor 20 has a rotor 26, with three coils 23, 24, and 25, that rotates within a two-pole stator. The stator poles consist of an N-pole permanent magnet 28 and an S-pole permanent magnet 29 fixedly held within a motor housing 27. Similarly, second D.C. brush motor 30 has a rotor 36, with three coils 33, 34, and 35, that rotates within a two-pole stator. The stator poles consist of an N-pole permanent magnet 38 and an S-pole permanent magnet 39 fixedly held within a motor housing 37.

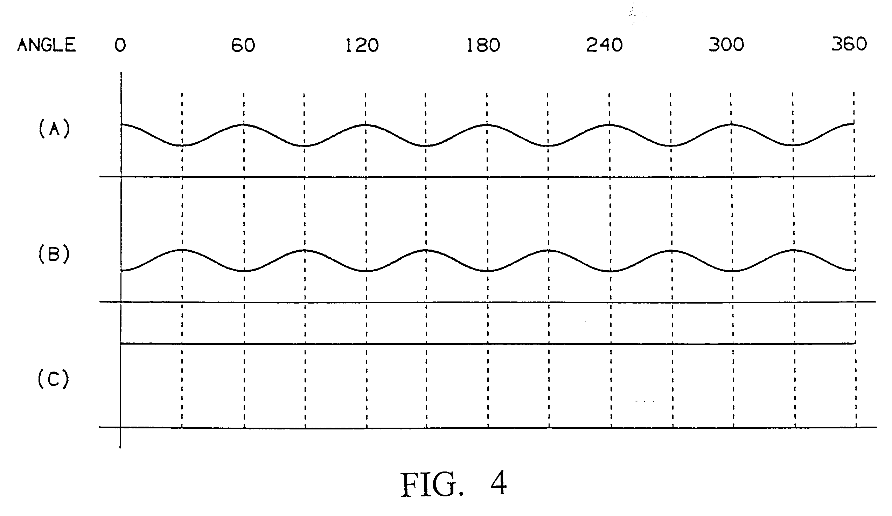

Referring now also to Fig. 4, curve A represents a torque output of first D.C. brush motor 20 with rotational displacement. Curve B represents a torque output of second D.C. brush motor 30. As can be seen in the figure, the torques of both motors oscillates with rotational displacement. These oscillations, or torque ripples, occur every 60 degrees of the rotation angles of motors 20 and 30.

In the embodiment of Fig. 3, first and second D.C. brush motors 20 and 30 are connected to motor chassis 4 so that the alignment of housings 27 and 37 are 30 degrees offset relative to each other. With this alignment, permanent magnets 28 and 29 of first D.C. brush motor 20, and magnets 38 and 39 of second D.C. brush motor 30, are in the relative positions indicated in Fig. 3. Shafts 21 and 31 of D.C. brush motors 20 and 30 are connected by timing belt 10 so that rotors 26 and 36 are in identical rotational positions. Referring now also to curve C of Fig. 4, with this configuration, torque ripple is canceled out, and the composite torque output from D.C. brush motors 20 and 30 increased, as represented by the composite torque curve C. Thus, composite output from composite motor 1 provides smooth rotation. Note that, in addition to a 30 degree offset, housings 27 and 37 could be offset by any multiple of 60 degrees plus 30 degrees to achieve the same result. In addition, the relative positions of rotors 26 and 36 may be offset by any multiple of 60 degrees without affecting the result.

Individually, D.C. brush motors 26 and 36 tend to come to a halt at natural resting positions separated by 60 degree intervals, or six resting positions per full rotation. However with D.C. brush motors 50 and 60 drivingly engaged with described offset of the motor housings, the combination of the two motors has natural resting positions every 30 degrees. Thus, there are twelve natural stopping positions of shaft 21 of composite motor 1 for each rotation. When composite motor 1 is used to drive a positioning system, such as the thread drive of a CD player which positions the optical pickup, the positioning resolution is increased over a thread drive using a conventional single motor drive.

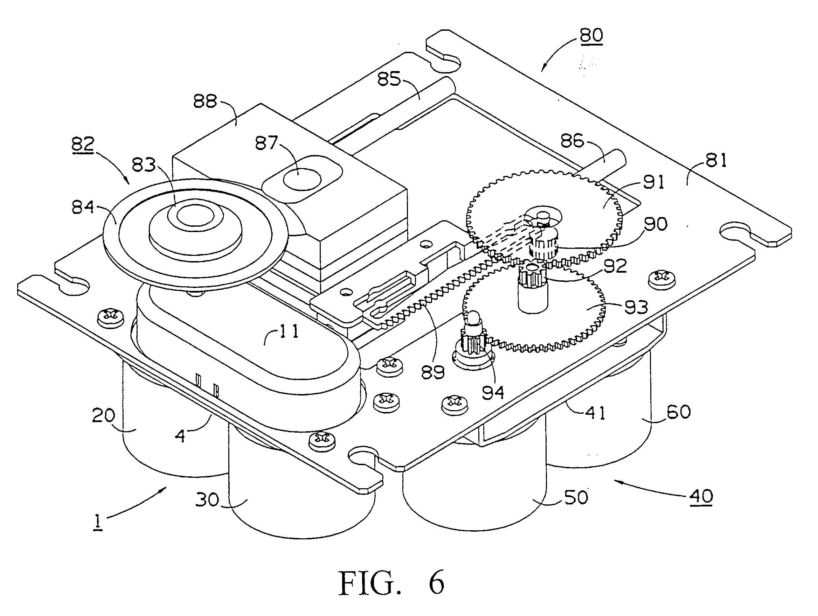

Referring to Fig. 5, in a composite motor 40 according to a second embodiment of the invention, shafts 51 and 61 of D.C. brush motors 50 and 60 are interconnected by gears. In composite motor 40 spur gears 52 and 62 are attached to shafts 51 and 61 of D.C. brush motors 50 and 60, respectively. Shaft 51 is longer than shaft 60 and serves as a composite output of composite motor 40. Spur gears 52 and 62 both mesh with a connecting gear 42, rotatably supported on a motor chassis 41 so that torque of both motors is applied to shaft 51.

As in the first embodiment of the invention, the motor housings for D.C. brush motors 50 and 60 of composite motor 40 are attached to motor chassis 41 so that the alignment of one is 30 degrees offset from that of the other, as shown in Fig. 3. Spur gears 52 and 62 are connected by connecting gear 42 so that the rotors 26 and 36 maintain a constant zero phase-difference relationship as shafts 51 and 61 rotate.

Referring to Fig. 6, either of composite motors 1 or 40 can be used in a CD-ROM disk drive 70 as a spindle drive for rotating a turntable 82. In addition, either could be used as a thread drive to move an optical pickup 88 to scan the disk. In both applications, the composite motor 1, 40 is mounted on a base mechanism 80. In the embodiment of Fig. 6, composite motor 1 is used as the spindle drive and composite motor 40 as the thread drive. Output shaft 21 of composite motor 1 is fixedly attached to turntable 82, rotatably supporting a disk (not shown in the drawing). Turntable 82 has a circular cone-shaped projection 83 to engage a center hole of the disk. The disk is supported by a circular mounting surface 84. Motor chassis 4 is fixed to one side of chassis 81.

As a result of the torque-ripple cancellation effect of composite motor 1, turntable 82 is rotated smoothly (that is, with little or no vibration) as compared to a configuration in which turntable 82 is rotated by a single D.C. brush motor. In addition, another advantage of composite motor 1 is that during rotation start-up, normal rotation, acceleration, and other operations during which a high torque is desirable, D.C. brush motors 20 and 30 together produce a high combined torque to rotate turntable 82. Moreover, each motor of composite motor 1 requires less current to maintain the required speed of the output than if either motor were used alone. Thus, the current in coils 23-25 and 33-35 of D.C. brush motors 20 and 30 of composite motor 1, 40 is substantially less than if a single motor is used, thereby extending the predicted life of the D.C. brush motors 20 and 30.

Two guide shafts 85 and 86 are fixedly attached, in parallel, to chassis 81. Optical pickup 88, which contains an objective lens 87, is movably supported by guide shafts 85 and 86. Optical pickup 88 is driven by a rack 89, parallel to a scanning direction followed by optical pickup 88. A small-diameter first deceleration gear 90, rotatably connected to chassis 81, meshes with and drives rack 89.

A large-diameter second deceleration gear 91, integral and coaxial with first deceleration gear 90 engages a small-diameter third deceleration gear 92 rotatably supported on another side of chassis 81. A large-diameter fourth deceleration gear 93 integral and coaxial with third deceleration gear 92 engages a small-diameter gear 94 fixedly attached to output shaft 51 of composite motor 40. Composite motor 40 is fixed to a side of chassis 81.

Optical pickup 88 is driven smoothly by composite motor 40, as turntable 82 is driven smoothly by composite motor 1, because of the torque ripple cancellation effect discussed above. Also, as in composite motor 1, current flowing to each of D.C. brush motors 50 and 60 is lower extending the predicted lives of motors 50 and 60.

Where a single D.C. motor, such as used in the embodiment of Fig. 6, is used alone as a thread drive, the natural stopping positions of the rotor of the single motor 50 or 60 causes the positioning resolution to be limited to the distance corresponding to a rotor angular displacement of 60 degrees, or six positions for every rotation. The composite motor, as discussed, doubles this resolution so that positioning precision is improved. That is, shaft 51 of composite motor 40 has natural stopping positions every 30 degrees, or 12 positions in a single rotation, so that the minimum displacement of the thread drive is half that of a single-motor drive. This makes it possible for optical pickup 88 to be moved in smaller increments, increasing positioning accuracy.

Although in the embodiments described above, composite motor 1 is used as the spindle drive and composite motor 40 is used as the thread drive, it should be clear from the discussion that the two motor drives are interchangeable. Thus, composite motor 40, could be used as a spindle motor. However, because the speed of the spindle drive is high, composite motor 1 is better suited as the spindle drive, because timing belt 10 is less prone to generate noise than the gears of composite motor 1.

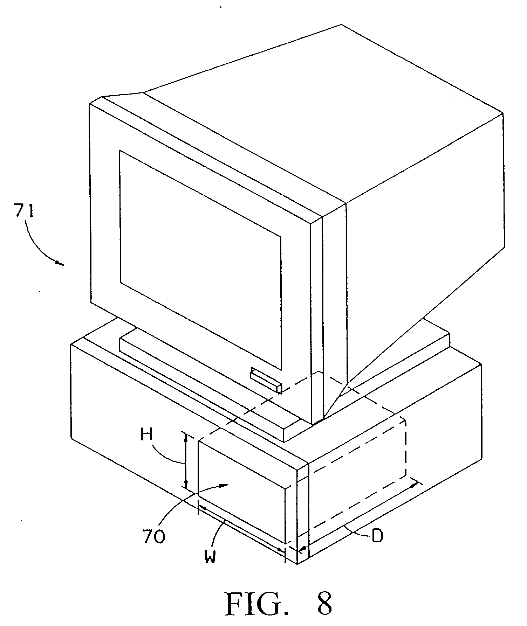

In the first embodiment, the stators of D.C. brush motors 20 and 30 of the first embodiment and D.C. brush motors 50 and 60 of the second embodiment are positioned to offset their respective torque ripple peaks by 30 degrees. This serves to cancel out the torque ripple. In addition to positioning the stators in this way, depending on the configuration of the motor, it is also possible to obtain the desired phase relationship between torque curves by positioning the timing belts or gears so that the rotors 26 and 36 are aligned to offset the torque peaks by 30 degrees. Referring to Fig. 7, in this case, the motor stators, with their motor housings, can be aligned in the same position relative to each other. That is, the pair of motors is fixedly attached to a frame so that their housings are in rotationally identical positions (or any multiple of 60 degrees offset from each other). The rotors 26 and 36 are rotationally positioned 30 degrees offset from each other (or any multiple of 60 degrees plus 30 degrees offset) and the engagement mechanism (timing belt of gears) installed to make the offset between the rotors permanent. In general the result can be achieved by securing an alignment of the rotors 26 and 36 that is an integral multiple of 60 degrees plus 30 degrees different from the difference in alignment between the stators.

In the first and second embodiments described above, first and second D.C. brush motors 20, 30 and 50, 60 are attached to motor chassis 4 and 41, respectively to form a unitary device that can be sold as a motor assembly. Thus it is unnecessary for a manufacturer who installs the motor to perform the sub-assembly involving timing belt 10 or connecting gear 42, etc. Thus, a composite motor can be installed in a device using an assembly procedure similar to that used to install a single motor and there should be no disadvantages in production costs.

In the above embodiment, the two motors are connected by a timing belt or gears, but the present invention is not restricted to this. Any interconnecting drive that does not make the two motors unstable and that allows synchronized rotation can be used. Furthermore, the number of motors is not restricted to two. Three or more motors could be combined as desired.

In the above embodiment, composite motors 1 and 40 were described as spindle and thread drives for a CD-ROM drive. However, the present invention is not restricted to these applications, and can be applied as a drive for many different applications, which should be clear based on the disclosure of the present application.

According to the present invention, a plurality of motors are interconnected by a drive to cancel out torque ripples of the individual motors. Any desired torque can be obtained using a plurality of inexpensive motors to achieve high-performance with minimal cost. In addition, higher reliability and longevity can result. Increased compactness may be obtained because the second and other motors can be located remotely from the final drive output and because the dimension of the composite motor in the axial direction is the same as that of a single motor.

Also the present invention provides a drive with a greater number of natural stopping positions per revolution compared to a single motor drive. This permits enhanced positioning capability for a positioning drive such as a thread drive or any application where it is necessary for the drive to move in small increments.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A motor drive, comprising:
a chassis;
first and second motors fixedly connected to said chassis, for rotating said turntable;
said first motor having a first output shaft;
a first torque peak occurring at a first position of said first output shaft when said first motor is actuated;
said second motor having a second output shaft;
a second torque peak occurring at a second position of said second output shaft when said second motor is actuated; and
means for drivingly connecting said first and second output shafts so that said first output shaft is in said first position at a time when said second shaft is in a position other than said second position, whereby said first and second torque peaks, at least partially, cancel each other out when said first and second motors are actuated.

2. A motor drive as in claim 1, wherein said means for drivingly connecting includes:
first and second gears on said first and second output shafts; and
a timing belt meshingly engaged with said first and second gears.

3. A motor drive as in claim 2, further comprising:
a turntable for a disk player; and
said turntable being coaxially connected to said first output shaft.

4. A motor drive as in claim 1, wherein said means for drivingly connecting includes:
first and second gears on said first and second output shafts; and
at least one other gear meshingly engaged with said first and second gears.

5. A motor drive as in claim 1, wherein said first motor is mechanically identical to said second motor.

6. A motor drive as in claim 1, wherein:
each of said first and second motors has a stator and a rotor;
one of said stator and said rotor has a permanent magnet for creating a field for generating a respective one of said first and second output torques; and
another of said stator and said rotor has an armature for generating said respective one of said first and second output torques.

7. A motor drive as described in claim 6, wherein said first and second motors are fixedly mounted on said chassis with substantially identical orientations and positions with respect to a direction parallel to said first and second output shafts.

8. A motor drive, comprising:
a first motor with a first torque ripple curve having at least one first torque peak;
a second motor with a second torque ripple curve having at least one second torque peak; and
means for drivingly interconnecting said first motor with said second motor so that said first torque peak is non-coincident with said second torque peak.

9. A motor drive as in claim 8, wherein:
each of said first and second motors has a stator and a rotor;
one of said stator and said rotor has a permanent magnet for creating a field for generating a respective one of said first and second output torques; and
another of said stator and said rotor has an armature for generating said respective one of said first and second output torques.

10. A motor drive, comprising:
a chassis;
first and second motors, fixedly connected to said chassis;
said first and second motors having respective first and second stators;
said first motor having a first output shaft with a first torque peak occurring at a first position of said first output shaft relative to said first stator;
said second motor having a second output shaft with a second torque peak occurring at a second position of said second output shaft relative to said second stator;
means for drivingly connecting said first and second output shafts; and
said first stator being positioned relative to said second stator so that said first output shaft is in said first position at a time when said second output shaft is in a position other than said second position, whereby said first and second torque peaks, at least partially, cancel each other out when said first and second motors rotate.

11. A motor drive as in claim 10, wherein said means for drivingly connecting includes a timing belt.

12. A motor drive as in claim 10, wherein said means for drivingly connecting includes a gear.

13. A motor drive as in claim 10, further comprising:
a turntable for rotating a disk, rotatably mounted on said chassis; and
said turntable being coaxially connected to said first output shaft.

14. A motor drive as in claim 10, wherein said first motor is mechanically identical to said second motor.

15. A motor drive as in claim 10, wherein:
each of said first and second motors has a stator and a rotor;
one of said stator and said rotor has a permanent magnet for creating field for generating a respective one of said first and second output torques; and
another of said stator and said rotor has an armature for generating said respective one of said first and second output torques.

16. A motor drive as described in claim 15, wherein said first and second motors are substantially identically axially positioned with their shafts substantially parallel.

17. A motor drive, comprising:
a chassis;
first and second motors, fixedly connected to said chassis;
said first and second motors having respective first and second bodies
said first motor having a first output shaft with a first torque peak occurring at a first position of said first output shaft relative to said first body;
said second motor having a second output shaft with a second torque peak occurring at a second position of said second output shaft relative to said second body;
means for drivingly connecting said first and second output shafts;
said means drivingly interconnecting including means for fixing an angular relationship between said first and second shafts; and
said angular relationship being fixed so that said first output shaft is in said first position at a time when said second shaft is in a position other than said second position, whereby said first and second torque peaks, at least partially, cancel each other out when said first and second motors rotate.

18. A motor drive as in claim 17, wherein said means for drivingly connecting includes a timing belt.

19. A motor drive as in claim 17, wherein said means for drivingly connecting includes a gear.

20. A motor drive as in claim 17, further comprising:
a turntable, for rotating a disk, rotatably mounted on said chassis;
said turntable being coaxially connected to said first output shaft.

21. A motor drive as in claim 17, wherein said first motor is mechanically identical to said second motor.

22. A motor drive as in claim 17, wherein:
each of said first and second motors has a stator and a rotor;
one of said stator and said rotor has a permanent magnet for creating field for generating a respective one of said first and second output torques; and
another of said stator and said rotor has an armature for generating said respective one of said first and second output torques.

23. A motor drive as described in claim 22, wherein said first and second motors are substantially identically axially positioned with their shafts substantially parallel.

24. A motor drive, comprising:
a chassis;
first and second motors having first and second output shafts and first and second bodies, respectively;
said first and second motors being fixedly mounted on said chassis with said first and second output shafts parallel and said first and second bodies side-by-side in substantially the same position along a direction parallel to said first and second output shafts;
means for drivingly connecting said first and second output shafts;
said means for drivingly connecting including means for synchronizing rotations of said first and second shafts at a one-to-one drive ratio;
said first motor having a first torque peak occurring at a first position of said first output shaft;
said second motor having a second torque peak occurring at a second position of said second output shaft; and
said means for synchronizing including means for insuring that said first output shaft is in said first position at a time when said second shaft is in a position other than said second position, whereby said first and second torque peaks, at least partially, cancel each other out when said first and second motors rotate.
